# EUROPEAN PATENT SPECIFICATION

(11) **EP 1 247 812 B1**
(45) Date of publication and mention of the grant of the patent: **06.06.2007**
(21) Application number: 02252456.5
(22) Date of filing: 05.04.2002
(51) Int. Cl.: C07F 7/18, C08K 9/06, C08K 5/548, C09C 3/12

(54) **Organosilicon compounds and preparation processes**
Organosilizium-Verbindungen und Herstellungsverfahren
Composés organosiliciques et procedé de préparation

(30) Priority: 06.04.2001 JP 2001107982
(43) Date of publication of application: 09.10.2002
(73) Proprietor: Shin-Etsu Chemical Co., Ltd., Chiyoda-ku, Tokyo (JP)
(72) Inventor: Yanagisawa, Hideyoshi, c/o Silicone Electronics, Matsuida-machi, Usui-gun, Gunma-ken (JP); Yamaya, Masaaki, Silicone-Electronics Materials, Matsuida-machi, Usui-gun, Gunma-ken (JP)
(74) Representative: Stoner, Gerard Patrick

(56) References cited:
- EP-A- 0 670 347
- EP-A- 0 748 839
- EP-A- 0 753 549
- WO-A-02/20534
- DE-A- 4 424 582
- SE-B- 465 267
- US-A- 4 709 065
- US-A- 5 583 245
- STJERNLOEF, PETER ET AL: "Butyl 3-(trimethoxysilyl)propyl disulfide. A new effective reagent for silicon surface modification and protein immobilization;preparation procedure" TETRAHEDRON LETT., vol. 31, no. 40, 1990, pages 5773-5774, XP001074025

## Description

This invention relates to processes for preparing organosilicon compounds having an organooxysilyl group at one end of a molecule and a monovalent hydrocarbon group at the other end thereof and containing a polysulfide group, or having organooxysilyl groups at both ends of a molecule and containing a divalent hydrocarbon group flanked with polysulfide groups at a center thereof.

### BACKGROUND

Compounds containing alkoxysilyl and polysulfide groups within the molecule are known in the art. These compounds are used as an interfacial binder between inorganic materials such as silica, aluminum hydroxide and talc and organic materials such as thermosetting resins, thermoplastic resins and rubber, an adhesion modifier for organic resins and rubber, a primer composition or the like.

While sulfide group-containing organosilicon compounds are applied to composite materials composed of resins or rubber and inorganic materials as mentioned above, compositions obtained by adding known sulfide group-containing organosilicon compounds to resins or rubber and mixing them with inorganic materials suffer from insufficient abrasion resistance. The compounds made in the present invention have the formula

(R¹O)₍₃₋ₚ₎(R²)ₚSi-R³-Sₘ-R⁴-A (1)

wherein R¹ and R² are each a monovalent hydrocarbon group having 1 to 4 carbon atoms, R³ and R⁴ are each a divalent hydrocarbon group having 1 to 10 carbon atoms, A is hydrogen or the moiety -Sₘ-R³-Si(OR¹)₍₃₋ₚ₎(R²)ₚ, m is 2 and p is 0, 1 or 2.

SE-A-465267 and Tetrahedron Letters vol. 31 No. 40, pp5773-5774 (Stjernlöf et al) describes the following synthesis using diethyl azodicarboxylate (DEAD) and 3-trimethoxysilylpropanethiol to make the compound 5 useful for providing an active surface (R = butyl or phenyl).

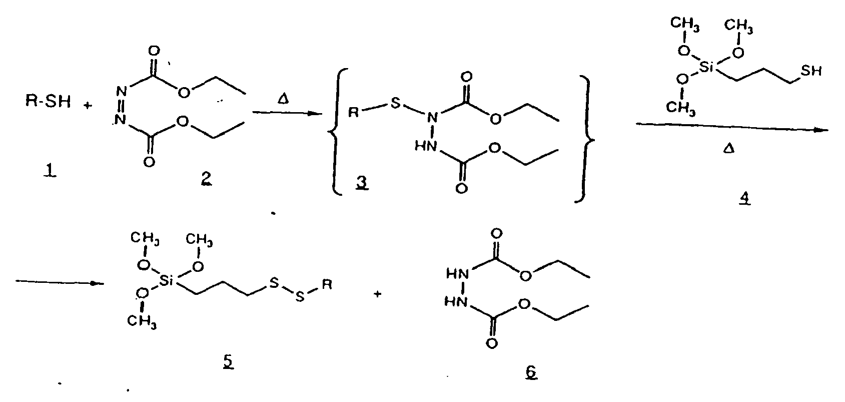

EP-A-0753549 and EP-A-0748839 refer to a known method of making silanes of the formula

R¹R²R³Si-X¹-(Sₓ-Y)ₘ-(Sₓ-X²-SiR¹R²R³)ₙ

by reacting haloalkyl silyl ethers and polyhalides with metal polysulfides in the presence of alcoholic solvents at from -20°C to 120°C:

R¹R²R³Si-X-Hal + Hal-Y-Hal + Na₂Sₓ → R¹R²R³Si-X-Sₓ(X-Sₓ)ₘ-X-SiR¹R²R³ + NaHal

where R¹, R², R³ are inter alia C₁₋₁₈ alkyl or alkoxy, X¹ and X² are C₁₋₁₂ alkylene, Y is alkylene or arylene, m is 1 to 20, n is 1 to 6 and x is 1 to 8.

The present invention provides a process for preparing organosilicon compound having the following general formula (1) :

(R¹O)₍₃₋ₚ₎(R²)ₚSi-R³-Sₘ-R⁴-A (1)

wherein R¹ and R² are selected from monovalent hydrocarbon groups having 1 to 4 carbon atoms, R³ and R⁴ are divalent hydrocarbon groups having from 1 to 10 carbon atoms, and A is hydrogen or a moiety -Sₘ-R³-Si(OR¹)₍₃₋ₚ₎(R²)ₚ, where m is 2 and p is 0, 1 or 2, comprising reacting mercaptoalkyl group-containing organosilicon compound of the following general formula (5):

(R¹O)₍₃₋ₚ₎(R²)ₚSi-R³-SH (5)

wherein R¹, R², R³ and p are as defined above, with sulfenamide group-containing compound of the following general formula (6):

(R⁵) (R⁶)N-S-R⁴-B (6)

wherein R⁴ is as defined above, R⁵ and R⁶ are selected independently from hydrogen and monovalent hydrocarbon groups having from 1 to 6 carbon atoms, provided that R⁵ and R⁶ are not hydrogen at the same time, or R⁵ and R⁶, together form a divalent hydrocarbon group of from 4 to 10 carbon atoms which may contain oxygen or sulfur atom, and B is hydrogen or a moiety -S-N(R⁵)(R⁶).

### FURTHER EXPLANATIONS; OPTIONS AND PREFERENCES

The organosilicon compounds made by the process of the invention are of the general formula (1).

(R¹O)₍₃₋ₚ₎(R²)ₚSi-R³-Sₘ-R⁴-A (1)

Herein R¹ and R² are each a monovalent hydrocarbon group having 1 to 4 carbon atoms, for example, alkyl and alkenyl groups such as methyl, ethyl, n-propyl, i-propyl, n-butyl, i-butyl, t-butyl, allyl and methallyl. R³ and R⁴ each are a divalent hydrocarbon group having 1 to 10 carbon atoms, for example, alkylene, arylene and alkenylene groups such as methylene, ethylene, propylene, n-butylene, i-butylene, hexylene, decylene, phenylene, and methylphenylethylene, and mixtures thereof. A is hydrogen or the moiety: -Sₘ-R³-Si(OR¹)₍₃₋ₚ₎(R²)ₚ, m is 2 and p is 0, 1 or 2.

Typical, non-limiting examples of the compound of formula (1) are given below.

(CH₃CH₂O)₃Si-(CH₂)₃-S₂-CH₂CH₂CH₂CH₂CH₂CH₃

(CH₃O)₃Si-(CH₂)₃-S₂-CH₂CH=CH₂

(CH₃CH₂O)₃Si-(CH₂)₃-S₂-CH₂CH₂CH₂CH₂CH₂CH₂-S₂-(CH₂)₃-Si(OCH₂CH₃)₃

(CH₃CH₂O)₃Si-(CH₂)₃-S₂-(CH₂)₁₀-S₂-(CH₂)₃-Si(OCH₂CH₃)₃

In the aforementioned compound, sulfur is merely represented by an average value because m has a distribution due to disproportionation reaction or the like.

The organosilicon compound of formula (1) is prepared by the step of reacting a mercaptoalkyl group-containing organosilicon compound of the following general formula (5):

(R¹O)₍₃₋ₚ₎(R²)ₚSi-R³-SH (5)

with a sulfenamide group-containing compound of the following general formula (6):

(R⁵)(R⁶)N-S-R⁴-B (6).

In the above formulae, R¹, R², R³, R⁴ and p are as defined above.

R⁵ and R⁶ are independently selected from hydrogen and monovalent hydrocarbon groups having 1 to 6 carbon atoms, for example, alkyl groups such as methyl, ethyl, n-propyl and i-propyl, alkenyl groups such as vinyl and allyl, and phenyl. R⁵ and R⁶ may be the same or different, with the proviso that R⁵ and R⁶ are not hydrogen at the same time. Alternatively, R⁵ and R⁶ may form a ring with the nitrogen atom and in this event, they form a divalent hydrocarbon group having 4 to 10 carbon atoms which may contain oxygen or sulfur atom, for example, alkylene, arylene, alkenylene or mixtures thereof.

B is hydrogen or the moiety: -S-N(R⁵)(R⁶).

Typical, non-limiting examples of the compound of formula (5) are given below.

(CH₃O)₃Si-(CH₂)₃-SH

(CH₃CH₂O)₃Si-(CH₂)₃-SH

(CH₃O)₃Si-(CH₂)₄-SH

(CH₃O)₃Si-(CH₂)₆-SH

(CH₃O)₃Si-(CH₂)₁₀-SH

(CH₃O)₃Si-CH₂CH(CH₃)CH₂-SH

(CH₃CH₂O)₃Si-CH₂CH(CH₃)CH₂-SH

Typical, non-limiting examples of the compound of formula (6) are given below.

(CH₃)₃C-NH-S-CH₂CH₂CH₂CH₃

(CH₃)₃C-NH-S-(CH₂)₅CH₃

(CH₃)₃C-NH-S-(CH₂)₉CH₃

(CH₃)₃C-NH-S-CH₂CH=CH₂

(CH₃)₃C-NH-S-(CH₂)₆-S-NHC(CH₃)₃

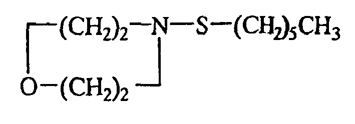

When the organosilicon compound is prepared by reacting the mercaptoalkyl group-containing organosilicon compound of the formula (5): (R¹O)₍₃₋ₚ₎(R²)ₚSi-R³-SH with the sulfenamide group-containing compound of the formula (6): (R⁵)(R⁶)N-S-R⁴-B, use of a solvent is arbitrary. Examples of the solvent, if used, include hydrocarbons such as pentane, hexane, heptane, octane, benzene, toluene and xylene, alcohols such as methanol and ethanol, ethers such as dibutyl ether, tetrahydrofuran and dioxane, ketones such as methyl ethyl ketone and methyl isobutyl ketone, esters such as ethyl acetate, and amides such as dimethylformamide. The reaction temperature is generally in the range of about 0°C to 150°C, preferably about 50°C to 100°C. The reaction time may continue until either the compound of formula (5) or (6) is consumed, and generally ranges from about 30 minutes to about 20 hours. The way of reaction is arbitrary and, for example, involves charging the compounds of formulae (5) and (6) and optionally, solvent, and heating the charge. The molar ratio of the compound (5) to the compound (6) during reaction may be 1:0.9-1.1.

The organosilicon compounds made by process are advantageously used as interfacial binders between inorganic materials such as silica, aluminum hydroxide and talc and organic materials such as thermosetting resins, thermoplastic resins and rubber, adhesion modifiers, surface treating agents and other agents applicable to such materials. In these applications, compositions obtained by adding the organosilicon compounds to resins or rubber and mixing with inorganic materials are fully resistant to abrasion.

It is presumed that the preparation processes according to the invention entail formation as impurities of compounds having the following general formula (13):

(R¹O)₍₃₋ₚ₎(R²)ₚSi-R³-Sₘ-R³-Si(R²)ₚ(OR¹)₍₃₋ₚ₎ (13)

wherein R¹, R², R³ and m are as defined above, and compounds having the following general formula (14):

D-(R⁴-Sₘ-R⁴-E)ₛ- (14)

wherein D is hydrogen or a valence bond to E, E is hydrogen or -Sₘ-, s is an integer of at least 1, R⁴ and m are as defined above. However, the inclusion of these impurities in the reaction product does not impede the use of the compound, such as for addition to rubber or organic resins or surface treatment of inorganic fillers.

### EXAMPLE

An example of the invention is given below, by way of illustration.

### Example 1

A 1-liter separable flask equipped with a nitrogen gas inlet, thermometer, Dimroth condenser and dropping funnel was charged with 238.0 g (1.0 mol) of 3-mercaptopropyltriethoxysilane and 203.0 g (1.0 mol) of a sulfenamide of the formula: (CH₃)₃C-NH-S(CH₂)₅CH₃. The contents were ripened at 95°C for 5 hours. The reaction solution was concentrated in vacuum in a rotary evaporator for removing by-product t-butylamine, leaving 323.6 g of a brown clear liquid. On analysis by IR spectroscopy and proton NMR spectroscopy, it was confirmed to be a sulfide group-containing alkoxysilane having the average compositional formula below.

(CH₃CH₂O)₃Si(CH₂)₃-S₂-(CH₂)₅ CH₃

## Claims

1. A process for preparing organosilicon compound having the following general formula (1):
(R¹O)₍₃₋ₚ₎(R²)ₚSi-R³-Sₘ-R⁴-A (1)
wherein R¹ and R² are selected from monovalent hydrocarbon groups having 1 to 4 carbon atoms, R³ and R⁴ are divalent hydrocarbon groups having from 1 to 10 carbon atoms, and A is hydrogen or a moiety -Sₘ-R³-Si(OR¹)₍₃₋ₚ₎(R²)ₚ, where m is 2 and p is 0, 1 or 2, comprising reacting mercaptoalkyl group-containing organosilicon compound of the following general formula (5):
(R¹O)₍₃₋ₚ₎(R²)ₚSi-R³-SH (5)
wherein R¹, R², R³ and p are as defined above, with sulfenamide group-containing compound of the following general formula (6):
(R⁵)(R⁶)N-S-R⁴-B (6)
wherein R⁴ is as defined above, R⁵ and R⁶ are selected independently from hydrogen and monovalent hydrocarbon groups having from 1 to 6 carbon atoms, provided that R⁵ and R⁶ are not hydrogen at the same time, or R⁵ and R⁶ together form a divalent hydrocarbon group of from 4 to 10 carbon atoms which may contain oxygen or sulfur atom, and B is hydrogen or a moiety -S-N(R⁵)(R⁶).

2. A process according to claim 1 in which groups R⁵ and R⁶ are selected from hydrogen, alkyl groups, alkylene groups and phenyl, or together form an alkylene, alkenylene, arylene or combination thereof which may contain oxygen or sulfur atom.

3. A process according to claim 2 in which R⁵ and R⁶ are selected from methyl, ethyl, n-propyl, i-propyl, vinyl, allyl and phenyl.

4. A process according to any one of the preceding claims in which the reaction temperature for said reaction is from 50°C to 100°C.

5. A process comprising preparing organosilicon compound by a process according to any one of the preceding claims, followed by use of the resulting organosilicon compound product as compounding additive for an inorganic/organic composite material, or as a surface treating agent for a filler.

## Patentansprüche

1. Verfahren zur Herstellung einer Organosiliciumverbindung der folgenden allgemeinen Formel (1):
(R¹O)₍₃₋ₚ₎(R²)ₚSi-R³-Sₘ-R⁴-A (1)
worin R¹ und R² aus einwertigen Kohlenwasserstoffgruppen mit 1 bis 4 Kohlenstoffatomen ausgewählt sind, R³ und R⁴ zweiwertige Kohlenwasserstoffgruppen mit 1 bis 10 Kohlenstoffatomen sind und A Wasserstoff oder eine Gruppierung -Sₘ-R³-Si-(OR¹)₍₃₋ₚ₎(R²)ₚ ist, worin m = 2 ist und p = 0, 1 oder 2 ist,
umfassend das Umsetzen einer eine Mercaptoalkylgruppe enthaltenden Organosiliciumverbindung der folgenden allgemeinen Formel (5):
(R¹O)₍₃₋ₚ₎(R²)ₚSi-R³-SH (5)
worin R¹, R², R³ und p wie oben definiert sind, mit einer eine Sulfenamidgruppe enthaltenden Verbindung der folgenden allgemeinen Formel (6):
(R⁵)(R⁶)N-S-R⁴-B (6)
worin R⁴ wie oben definiert ist, R⁵ und R⁶ unabhängig voneinander aus Wasserstoff und einwertigen Kohlenwasserstoffgruppen mit 1 bis 6 Kohlenstoffatomen ausgewählt sind, mit der Maßgabe, dass R⁵ und R⁶ nicht gleichzeitig Wasserstoff sind, oder R⁵ und R⁶ zusammen eine einwertige Kohlenwasserstoffgruppe mit 4 bis 10 Kohlenstoffatomen bilden, die gegebenenfalls Sauerstoff- oder Schwefelatome enthält, und B Wasserstoff oder eine Gruppierung -S-N(R⁵)(R⁶) ist.

2. Verfahren nach Anspruch 1, worin die Gruppen R⁵ und R⁶ aus Wasserstoff, Alkylgruppen, Alkylengruppen und Phenyl ausgewählt sind oder zusammen ein Alkylen, Alkenylen, Arylen oder eine Kombination davon bilden, die gegebenenfalls Sauerstoff- oder Schwefelatome enthalten.

3. Verfahren nach Anspruch 2, worin R⁵ und R⁶ aus Methyl, Ethyl, n-Propyl, Isopropyl, Vinyl, Allyl und Phenyl ausgewählt sind.

4. Verfahren nach einem der vorangegangenen Ansprüche, worin die Reaktionstemperatur für die Reaktion 50 bis 100 °C beträgt.

5. Verfahren, umfassend das Herstellen einer Organosiliciumverbindung durch ein Verfahren nach einem der vorangegangenen Ansprüche, gefolgt von der Verwendung des resultierenden Organosiliciumverbindungsprodukts als Compoundierungsadditiv für ein anorganisch-organisches Verbundmaterial oder als Oberflächenbehandlungsmittel für einen Füllstoff.

## Revendications

1. Procédé de préparation d'un composé d'organosilicium ayant la forme générale qui suit (1):
(R¹O)₍₃₋ₚ₎(R²)ₚSi-R³-Sₘ-R⁴-A (1)
où R¹ et R² sont sélectionnés parmi des groupes hydrocarbures monovalents ayant 1 à 4 atomes de carbone, R³ et R⁴ sont des groupes hydrocarbures divalents ayant de 1 à 10 atomes de carbone, et A est de l'hydrogène ou une fraction -Sₘ-R³-Si (OR¹)₍₃₋ₚ₎(R²)ₚ, où m est 2 et p est 0, 1 ou 2, comprenant la réaction de
un composé d'organosilicium contenant un groupe mercaptoalkyle de la formule générale (5) qui suit:
(R¹O)₍₃₋ₚ₎(R²)ₚSi-R³-SH (5)
où R¹, R², R³ et p sont tels que définis ci-dessus, avec un composé contenant un groupe sulfénamide de la formule générale (6) qui suit:
(R⁵) (R⁶)N-S-R⁴-B (6)
où R⁴ est tel que défini ci-dessus, R⁵ et R⁶ sont indépendamment sélectionnés parmi hydrogène et des groupes hydrcarbures monovalents ayant de 1 à 6 atomes de carbone à condition que R⁵ et R⁶ ne soient pas de l'hydrogène en même temps, ou bien R⁵ et R⁶ forment ensemble un groupe hydrocarbure divalent de 4 à 10 atomes de carbone qui peut contenir un atome d'oxygène ou de soufre, et B est hydrogène ou une fraction -S-N(R⁵) (R⁶).

2. Procédé selon la revendication 1 dans lequel les groupes R⁵ et R⁶ sont sélectionnés parmi hydrogène, des groupes alkyles, des groupes alkylènes et phényles, ou bien ensemble ils forment un alkylène, un alcényle, un arylène ou une combinaison de ceux-ci qui peut contenir un atome d'oxygène ou de soufre.

3. Procédé selon la revendication 2 dans lequel R⁵ et R⁶ sont sélectionnés parmi méthyle, éthyle, n-propyle, i-propyle, vinyle, allyle et phényle.

4. Procédé selon l'une quelconque des revendications précédentes dans lequel la température de réaction pour ladite réaction est de 50°C à 100°C.

5. Procédé comprenant la préparation d'un composé d'organosilicium par un procédé selon l'une quelconque des revendications précédentes suivi de l'utilisation du composé d'organosilicium produit résultant en tant qu'additif de mélange pour une matière composite inorganique/organique ou en tant qu'agent de traitement de surface pour une charge.
